# EUROPÄISCHE PATENTSCHRIFT

(11) **EP 3 012 788 B1**
(45) Veröffentlichungstag und Bekanntmachung des Hinweises auf die Patenterteilung: **17.01.2018**
(21) Anmeldenummer: 15002937.9
(22) Anmeldetag: 15.10.2015
(51) Int. Cl.: G06Q 10/08, B25H 1/12

(54) **VORRICHTUNG ZUM LAGERN UND ZUM ORGANISIEREN UND BEARBEITEN VON OBJEKTEN**
DEVICE FOR STORING AND FOR ORGANIZING AND PROCESSING OBJECTS
DISPOSITIF DE STOCKAGE ET D'ORGANISATION ET DE TRAITEMENT D'OBJETS

(30) Priorität: 21.10.2014 DE 202014008398 U
(43) Veröffentlichungstag der Anmeldung: 27.04.2016
(73) Patentinhaber: Lienhard, Tobias, 77652 Offenburg (DE)
(72) Erfinder: Lienhard, Tobias, 77652 Offenburg (DE)
(74) Vertreter: Huwer, Andreas

(56) Entgegenhaltungen:
- US-A- 5 113 349
- US-A- 6 142 459
- US-A1- 2008 183 327

## Beschreibung

Die Erfindung betrifft eine Vorrichtung zum Lagern und zum Organisieren und Bearbeiten von Objekten nach dem Oberbegriff des Anspruches 1.

Aus dem Flyer "FIFO-Board" der Firma Egert-System-Organisation GmbH, D-58540 Meinerzhagen, ist eine Vorrichtung zum Lagern und zum Organisieren und Bearbeiten von Objekten bekannt, bei der die Objekte auf Stellplatze abstellbar sind, wobei den Stellplatzen einteilige Informationsträger zugeordnet sind, die bei der Anlieferung der Objekte die Reihenfolge der Anlieferung kennzeichnen, wobei der Informationsträger einer Speichereinheit zuführbar ist und der Stapel der in der Speichereinheit gestapelten Informationsträger die Reihenfolge der Anlieferung der Objekte festlegt und wobei nach der Bearbeitung der Objekte die Informationsträger aus der Speichereinheit entnehmbar sind und die zugehörigen freiwerdenden Stellflachen kennzeichnen. Die Reihenfolge der Freigabe der Stellplatze stimmt dann mit der Reihenfolge der Anlieferung der Objekte überein. Diese Vorrichtung arbeitet nach dem sogenannten First in - First out - Prinzip.

Bei dieser Vorrichtung sind die Stellplatze in Größe und Lage fixiert. Dies hat den Nachteil, dass einzelne Objekte die vorgegebene bestimmte Stellflache überschreiten und somit mehrere Informationsträger gleichzeitig belegen. Eine eindeutige Zuordnung zwischen den Informationsträgern und dem eigentlichen Objekt ist dann nicht mehr gegeben.

Es ist Aufgabe der Erfindung, eine Vorrichtung zu schaffen, die beliebig große, nicht unterteilte Stellflächen zum Abstellen der angelieferten Objekte (je nach Größe und Lage dieser) zur Verfügung stellt und dennoch mit eindeutiger Kennzeichnung im First in - First out - Prinzip eingesetzt werden kann.

Die gestellte Aufgabe wird durch die Merkmale des Anspruches 1 gelöst.

Die erfindungsgemäße Vorrichtung ist dadurch gekennzeichnet, dass mehrere aus einem Aufsteckelement und einem Objektelement mit gleichen Symbolen zusammengesetzten Kennzeichen vorhanden sind, die paarweise gleich oder von Kennzeichen zu Kennzeichen unterschiedliche Symbole tragen, dass ein Kennzeichen in Aufsteckelement und Objektelement trennbar ist, dass bei der Anlieferung eines Objektes eine beliebige Stellfläche belegbar und das getrennte Objektelement dem Objekt auf der belegten Stellfläche zugeordnet aufbringbar ist, dass das getrennte Aufsteckelement in eine als Rutsche ausgebildete Speichereinheit einführbar ist, dass nach der Bearbeitung des als erstes angelieferten Objektes, das-durch das unterste Aufsteckelement im Stapel der in der Rutsche gestapelten Aufsteckelemente gekennzeichnet ist, die Abführung des Objektes auf der zugeordneten Stellfläche freigebbar ist und dass danach das der Rutsche entnommene Aufsteckelement und das vom zugeordneten Objekt entnommene Objektelement wieder zusammensetzbar ist und zur Verwendung für einen neuen Kennzeichnungsvorgang zur Verfügung steht.

Durch die Verwendung von mehreren aus einem Aufsteckelement und einem Objektelement zusammengesetzten Kennzeichen mit gleichen Symbolen, die aber von Kennzeichen zu Kennzeichen verschieden sind, ist es möglich, die Stellfläche beliebig und abhängig von der Größe des Objektes zu wählen, wobei das Objektelement die Stellfläche kennzeichnet und das zugehörige Aufsteckelement in der als Rutsche ausgebildeten Speichereinheit die Reihenfolge der Anlieferung des Objektes festhält.

Das unterste, der Speichereinheit entnommene Aufsteckelement gibt das zu bearbeitende Objekt vor. Nach der Bearbeitung dieses Objektes entfällt die Aufgabe des Aufsteckelementes und des Objektelementes. Beide können wieder zusammengesetzt und neu verwendet werden. Auch der frei werdende Stellplatz kann wieder belegt werden. In jedem Fall bleibt das First in - First out-Prinzip bei der erfindungsgemäßen Vorrichtung realisiert.

Vorteilhafte Ausgestaltungen der Vorrichtung sind den Unteransprüchen zu entnehmen.

So können die Objekte als Paletten mit einzelnen und mehreren zu behandelnden Gegenständen ausgebildet sein und als paarige Symbole für die Aufsteckelemente und die Objektelemente sind Ziffern, Zahlen, Worte, Bilder, Farben und dgl. Darstellungen verwendet.

Das Objektelement ist als Winkelelement mit einer horizontalen Aufstellplatte und einer daran abstehenden zur Aufstellplatte in einem Winkel β < 90° geneigten Verbindungsplatte für ein plattenförmiges Aufsteckelement ausgebildet. Das Aufsteckelement ist mit Übergangsflanschen und Endflanschen als Bügel ausgebildet, der auf die Verbindungsplatte des Objektelementes aufschiebbar ist und dabei die Verbindungsplatte des Objektelementes mit Spiel umschließt. Das Aufsteckelement und die Verbindungsplatte des Objektelementes als Komponenten tragen auf einer und/oder beiden Seiten gleiche Symbole.

Das Objektelement kann aber auch mit einem Dauermagneten mit einem metallischen, magnetisch leitenden Untergrund verbindbar sein. Zudem kann das Aufsteckelement und das Objektelement aus Metall gefertigt sein. Das Aufsteckelement ist dann mit einem Dauermagneten mit dem magnetisch leitenden Objektelement verbindbar.

Die Speichereinheit kann als vertikale Rutsche ausgebildet sein, die auf einer Grundplatte mit einer Stellplatte befestigt ist, wobei die Stellplatte an der Rutsche im Winkel β < 90° zur Grundplatte steht. Die Rutsche weist einen horizontalen T-förmigen Querschnitt auf und nimmt als Bügel ausgebildete Aufsteckelemente mit Spiel auf. Die Rutsche trägt im Bereich der unteren Öffnung einen Nocken, der den Stapel der in der Speichereinheit gestapelten, als Bügel ausgebildeten, Aufsteckelemente in der Rutsche festhält. Bei Entnahme des untersten Aufsteckelementes ist der Bügel des Aufsteckelemente verformbar und auslenkbar und das Aufsteckelement ist zur Entnahme freigegeben.

Die vertikale Grundplatte weist unterhalb der Rutsche in einem mindestens einer Höhe eines Aufsteckelementes in der Rutsche entsprechenden Abstand einen horizontalen Bügel auf, der zum Einhängen von aus Aufsteckelement und Objektelement zusammengesetzten Kennzeichen dient.

Das Aufsteckelement und das Objektelement können auch über eine Steckverbindung miteinander verbindbar und wieder lösbar sein. Es lassen sich auch andere Ausgestaltungen und Verbindungen für das Aufsteckelement und das Objektelement verwenden.

Die Grundplatte mit der Rutsche als Speichereinheit kann mit einer beliebigen vertikalen Wand verbindbar sein und die Grundplatte kann einen Behälter zur Aufnahme der aus Aufsteckelement und Objektelement zusammengesetzten Kennzeichen mit unterschiedlichen Symbolen aufweisen. Der Behälter kann auch der Grundplatte zugeordnet sein.

Die Erfindung wird anhand eines in den Zeichnungen dargestellten Ausführungsbeispiels näher erläutert. Es zeigen:
- Fig. 1: in perspektivischer Ansicht ein Bügel-Aufsteckelement,
- Fig. 2: in perspektivischer Ansicht ein als Winkelelement ausgebildetes Objektelement
- Fig. 3: in Vorderansicht und Seitenansicht eine als Rutsche ausgebildete Speichereinheit und
- Fig. 4: in Vorderansicht und Seitenansicht eine vertikale Grundplatte mit Rutsche und einem horizontalen Bügel für einhängbare zusammengesetzte Kennzeichen.

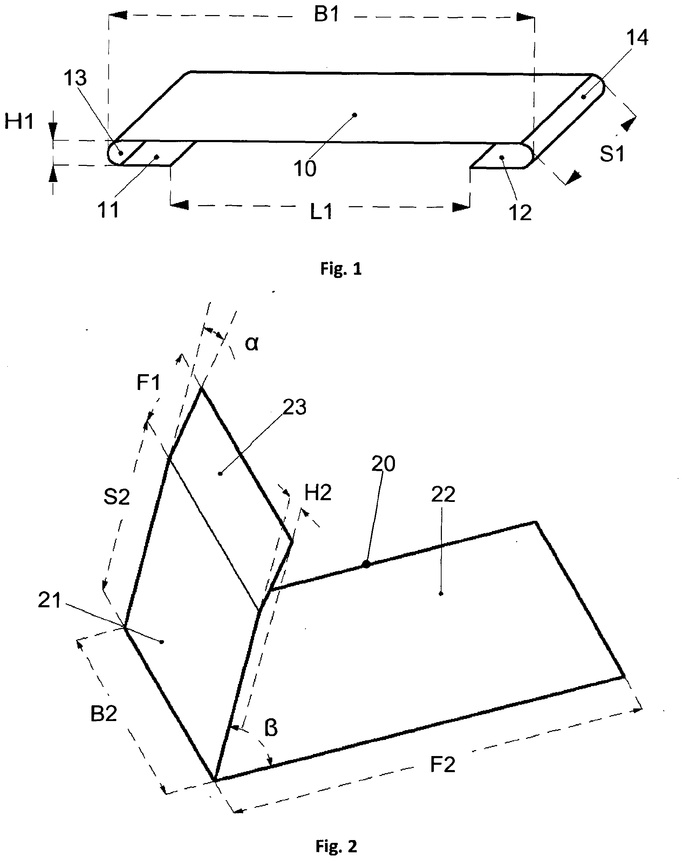

Das plattenartige Aufsteckelement 10 geht über Übergangsflansche 13 und 14 in Endflansche 11 und 12 über und bildet dabei einen Bügel, wie Fig. 1 zeigt. Zwischen dem Aufsteckelement 10 und den Endflanschen 11 und 12 ist eine Abmessung H₁, die der Abmessung H₂ des Objektelements 20 nach Fig. 2 entspricht. Diese Abmessung H₂ ist etwas größer als die Dicke der Verbindungsplatte 21. Die Oberseite der Verbindungsplatte 21 geht in einen geneigten Flansch 23 über, der in einem flachen Winkel β zur Verbindungsplatte 21 steht.

Die Abmessung B₂ der Verbindungsplatte 21 des Objektelementes 20 entspricht der Abmessung B₁ des Aufsteckelementes 10 minus eines Spiels, so dass das Aufsteckelement 10 unter Auslenkung des Flansches 23 der Verbindungsplatte 21 des Objektelementes 20 auf die Verbindungsplatte 21 aufgesteckt werden kann. Der Flansch 23 des Objektelementes 20 stützt sich mit Spannkraft an der Innenseite des bügelartigen Aufsteckelementes 10 oder einer Innenseite eines Endflansches 11 oder 12 des Aufsteckelementes 10 ab. Dadurch ist trotzdem Spiel zwischen dem Aufsteckelement 10 und der Verbindungsplatte 21 des Objektelementes 20 ein ausreichender Druck zwischen den miteinander verbundenen Aufsteckelemente 10 und Objektelemente 20 nötig, um das Aufsteckelement 10 auf die Verbindungsplatte 21 aufzubringen. Eine und/oder beide Seiten des Aufsteckelementes 10 und der Verbindungsplatte 21 des Objektelementes 20 können gleiche Symbole tragen, so dass unabhängig davon in welcher Stellung das Aufsteckelement 10 auf die Verbindungsplatte 21 des Objektelementes 20 aufgeschoben wird, jeweils eine mit dem Symbol versehene Seite des zusammengesetzten Kennzeichens einsehbar ist und ihre Zusammengehörigkeit kennzeichnen. Die Abmessung S₁ des Aufsteckelementes 10 entspricht der Abmessung S₂ des Objektelementes 20. Ist das Aufsteckelement 10 auf die Verbindungsplatte 21 aufgeschoben, dann federt der Flansch 23 zurück und erschwert das Abnehmen des Aufsteckelementes 10. Als Symbole werden Ziffern, Zahlen, Wörter, Bilder, Farben und dgl. Darstellungen verwendet.

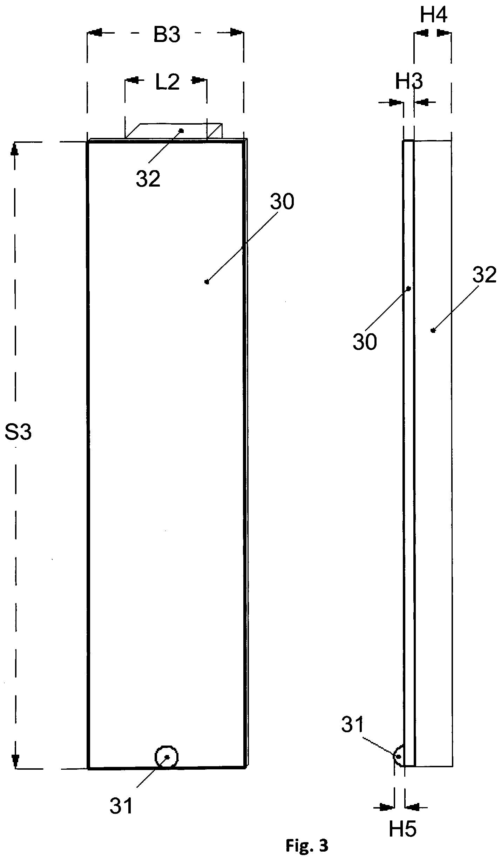

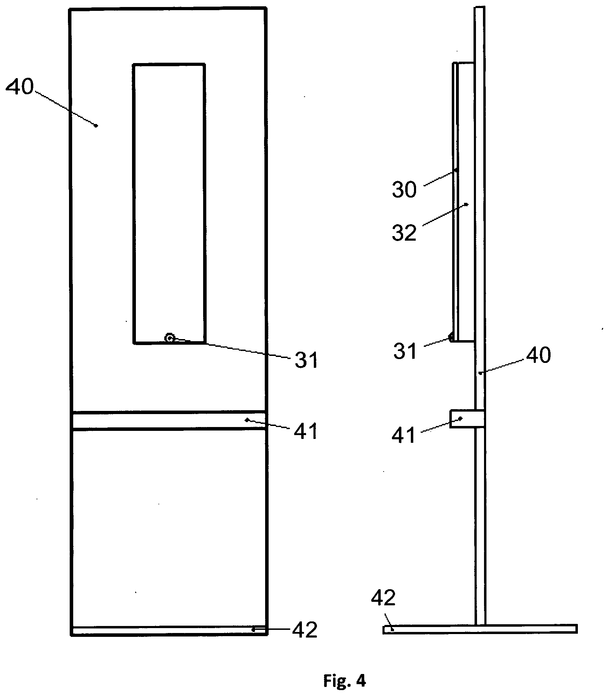

In Fig. 3 ist die Ausgestaltung einer Speichereinheit als Rutsche 30 gezeigt, wobei gleichzeitig die Platte der Rutsche 30 mit einer Breite B₃ und einer Länge S₃ ist. Auf der Rückseite der Rutsche 30 ist ein schmälerer Ansatz 32 angeformt, so dass horizontal ein T-förmiger Querschnitt der Rutsche 30 entsteht. Auf der Vorderseite trägt die Rutsche 30 im Bereich der unteren Öffnung einen Nocken 31 mit einer Höhe H₅. Die Dicke der Rutsche 30 hat eine Abmessung H₃. Diese Rutsche 30 ist als Speichereinheit auf der Vorderseite einer Grundplatte 40 mit einer Stellplatte 42 angeordnet und befestigt, wie Fig. 4 zeigt.

Die Länge S₃ der Rutsche 30 erstreckt sich über eine Abmessung, die einem Vielfachen der Abmessung S₁ des Aufsteckelementes 10 entspricht, so dass mehrere bügelartige Aufsteckelemente 10 von der Rutsche aufgenommen werden können. Die Breite B₃ der Rutsche 30 als Speichereinheit ist an das Innenmaß des als Bügel ausgebildeten Aufsteckelementes 10 mit Spiel angepasst, so dass die Aufsteckelemente 10 leicht in die Rutsche 30 eingeführt werden und aufgrund ihres Eigengewichtes in der Rutsche 30 sich leicht nach unten verstellen können. Der Ansatz 32 auf der Rückseite der Rutsche 30 hat eine Breite L₂, die etwas kleiner ist als die Abmessung L₁ des Aufsteckelementes 10 zwischen den Endflanschen 11 und 12. Der Ansatz 32 auf der Rückseite der Rutsche 30 hat eine Höhe H₄, die größer ist als die Abmessung H₁ des Aufsteckelements 10, damit die Rutsche 30 auf der Grundplatte 40 befestigt werden kann, ohne dass dadurch die Rutschbewegung der Aufsteckelemente 10 in der Rutsche 30 behindert wird. Die Grundplatte 40 ragt auf einer Stellplatte 42 nach oben, wobei die Grundplatte 40 auch unter einem Winkel β < 90° zur Stellplatte 42 stehen kann. Unterhalb der Rutsche 30 trägt die Grundplatte 40 einen horizontalen Bügel 41, der zum Einhängen zusammengesetzter Kennzeichen aus Aufsteckelement 10 und Objektelement 20 mit gleichen Symbolen dient. Die Rutsche 30 als Speichereinheit trägt im Bereich der unteren Öffnung einen abstehenden Nocken 31, der den Stapel der in die Rutsche 30 eingeführten Aufsteckelemente 10 festhält Beim Entnehmen des untersten Aufsteckelementes 10 aus der Rutsche 30 wird das Aufsteckelement 10 so verformt und ausgelenkt, dass es aus der Rutsche 30 entnommen werden kann. Der Bügel 41 der Grundplatte 40 ist in einem Abstand von der Unterkante der Rutsche 30 angeordnet, der mindestens der Höhe S₁ eines Aufsteckelementes 10 entspricht, damit er die Entnahme des untersten Aufsteckelementes 10 aus der Rutsche 30 nicht behindert.

Als Objekte sind Paletten mit einem oder mehreren Gegenständen darauf verwendet.

Der Vorteil der erfindungsgemäßen Vorrichtung ist, dass beliebige Stellflächen für unterschiedlich große Objekte verwendet werden können, und dass dennoch das First in - First out - Prinzip realisierbar ist.

Die Verbindung zwischen dem Aufsteckelement 10 und dem Objektelement 20 kann auch als reine Steckverbindung und als andere Verbindungsart gewählt sein, die ein einfaches Zusammensetzen und Wiederlösen der Kennzeichen ermöglicht. Auch die Rutsche 30 kann auf andersartige Aufsteckelemente 10 angepasst sein ohne das First in - First out - Prinzip zu verlassen.

Das Aufsteckelement 10 kann mit einem Dauermagneten mit einem metallischen, magnetisch leitenden Untergrund verbunden werden. Sind Aufsteckelement 10 und Objektelement 20 aus Metall gefertigt, dann kann das Aufsteckelement 10 mit einem Dauermagneten mit dem Objektelement 20 verbunden werden, wenn wenigstens das Metall des Objektelementes 20 magnetisch leitend ist.

Die Grundplatte 40 mit Rutsche 30 nach Fig. 4 kann auch ohne Stellplatte 42 direkt an einer beliebigen vertikalen Wand befestigt werden. Die Grundplatte 40 kann dabei einen Behälter zur Aufnahme von aus Aufsteckelement 10 und Objektelement 20 mit gleichen Symbolen zusammengesetzten Kennzeichen aufweisen oder es kann der Grundplatte 40 mit Rutsche 30 ohne Stellplatte 42 und Bügel 41 ein Behälter zur Aufnahme von aus Aufsteckelement 10 und Objektelement 20 mit gleichen Symbolen zusammengesetzten Kennzeichen zugeordnet sein.

Dies alles zeigt, dass die Vorrichtung in vielfacher Weise weitergebildet werden kann, ohne das First in - First out - Prinzip zu verlassen, dabei können aber beliebige, unterschiedlich große Stellflächen einer Gesamtstellfläche für die Objekte verwendet werden. Dennoch ist eine eindeutige Zuordnung der Aufsteckelemente 10 und der Objektelemente 20 erreicht.

## Patentansprüche

1. Vorrichtung zum Lagern und zum Organisieren und Bearbeiten von Objekten, die nacheinander anlieferbar, auf Stellflächen abstellbar und in der Reihenfolge ihrer Anlieferung bearbeitbar und wieder abführbar sind, wobei den Stellflächen zweiteilige Informationsträger zugeordnet sind, wovon ein Teil bei der Anlieferung eines Objektes abnehmbar und einer Speichereinheit zuführbar ist, aus der dieses Teil nach der Bearbeitung des Objektes in der Reihenfolge ihrer Anlieferung aufnehmbar und wieder der Stellfläche zuführbar ist, **dadurch gekennzeichnet, dass** mehrere aus einem Ansteckelement (10) und einem Objektelement (20) mit gleichen Symbolen zusammengesetzten Kennzeichen vorhanden sind, die paarweise gleich sind, aber von Kennzeichen zu Kennzeichen unterschiedliche Symbole tragen, dass ein Kennzeichen in Aufsteckelement (10) und Objektelement (20) trennbar ist, dass bei der Anlieferung eines Objektes eine beliebige Stellfläche belegbar und das getrennte Objektelement (20) dem Objekt auf der belegten Stellfläche zugeordnet aufbringbar ist, dass das getrennte Aufsteckelement (10) in die als Rutsche (30) ausgebildete Speichereinheit einführbar ist, dass nach der Bearbeitung des als erstes angelieferten Objektes, das durch das unterste Ansteckelement (10) im Stapel der in die Rutsche (30) gestapelten Aufsteckelemente (10) gekennzeichnet ist, die Abführung des Objektes auf der zugeordneten Stellfläche freigebbar ist und dass danach das der Rutsche (30) entnommene Aufsteckelement (10) und das vom zugeordneten Objekt entnommene Objektelement (20) wieder zusammensetzbar ist und zur Verwendung für einen neuen Kennzeichnungsvorgang zur Verfügung steht.

2. Vorrichtung nach Anspruch 1, **dadurch gekennzeichnet, dass** das Objekt als Palette mit einem einzelnen aufgebrachten Gegenstand oder mehreren aufgebrachten Gegenständen ausgebildet ist.

3. Vorrichtung nach Anspruch 1 und 2, **dadurch gekennzeichnet, dass** als Symbole Ziffern, Zahlen, Worte, Bilder, Farben und dgl. Darstellungen verwendet sind.

4. Vorrichtung nach Anspruch 1 bis 3, **dadurch gekennzeichnet, dass** das Objektelement (20) als Winkelelement mit einer horizontalen Aufstellplatte (22) und einer zur Aufstellplatte (22) unter einem Winkel β < 90° geneigten Verbindungsplatte (21) für ein Aufsteckelement (10) ausgebildet ist, dass das Aufsteckelement (10) plattenartig mit Übergangsflanschen (13,14) und Endflanschen (11,12) als Bügel ausgebildet ist, der mit Spiel auf die Verbindungsplatte (21) des Objektelementes (20) aufsteckbar und wieder abnehmbar ist und dass das Aufsteckelement (10) und die Aufsteckplatte (22) und/oder die Verbindungsplatte (21) des Objektelementes (20) auf einer und/oder beiden Seiten mit gleichen Symbolen versehen sind.

5. Vorrichtung nach Anspruch 1 bis 4, **dadurch gekennzeichnet, dass** das Objektelement (20) mittels eines Dauermagneten an einem metallischen, magnetisch leitenden Untergrund festlegbar ist.

6. Vorrichtung nach Anspruch 1 bis 5, **dadurch gekennzeichnet, dass** das Aufsteckelement (10) und das Objektelement (20) aus Metall gefestigt sind, wobei das Metall magnetisch leitend ist und dass das Aufsteckelement (10) mittels eines Dauermagneten mit dem Objektelement (20) verbindbar ist.

7. Vorrichtung nach Anspruch 1 bis 6, **dadurch gekennzeichnet, dass** die Speichereinheit als Rutsche (30) ausgebildet ist, in der die eingeführten Aufsteckelemente (10) aufgrund ihres Eigengewichtes eine Rutschbewegung von oben nach unten ausführen, dass die Rutsche (30) auf einer Grundplatte (40) mit einer Stellplatte (42) verbunden ist, wobei die Grundplatte (40) mit der Rutsche (30) in einem Winkel β < 90° zur Stellplatte (42) stehen kann, dass der horizontale Querschnitt der Rutsche (30) T-förmig ausgebildet ist und als Bügel ausgebildete Aufsteckelemente (10) mit Spiel aufnimmt, dass die untere Öffnung der Rutsche (30) einen Nocken (31) aufweist, der den Stapel von in die Rutsche (30) eingeführten Aufsteckelementen (10) in der Rutsche (30) festhält und dass beim Entnehmen des untersten Aufsteckelementes (10) aus der Rutsche (30) der Nocken (31) auslenkbar ist und das unterste Aufsteckelement (10) zur Entnahme aus der Rutsche (30) freigibt.

8. Vorrichtung nach Anspruch 7, **dadurch gekennzeichnet, dass** die Grundplatte (40) unterhalb der Rutsche (30) in einem Abstand von mindestens der Höhe des untersten Aufsteckelementes (10) in der Rutsche (30) einen horizontalen Bügel (41) zum Einhängen der aus Aufsteckelement (10) und Objektelement (20) zusammengesetzten Kennzeichen trägt.

9. Vorrichtung nach Anspruch 1 bis 8, dadurch genkennzeichnet, dass das Aufsteckelement (10) und das Objektelement (20) mittels einer Steckverbindung oder einer anders ausgestalteten Verbindung miteinander verbindbar und wieder lösbar sind.

10. Vorrichtung nach Anspruch 7, **dadurch gekennzeichnet, dass** die Grundplatte (40) mit der Rutsche (30) ohne Stellplatte (42) und Bügel (41) mit einer beliebigen vertikalen Wand verbindbar ist und dass die Grundplatte (40) einen Behälter aufweist oder der Grundplatte (40) ein Behälter zugeordnet ist, wobei der Behälter aus Aufsteckelement (10) und Objektelement (20) zusammengesetzte Kennzeichen aufnimmt.

## Claims

1. Apparatus for storing and for organising and processing objects which can be delivered one after the other, can be set down on placement surfaces and can be processed in the order in which they were delivered and can be taken away again, wherein the placement surfaces have associated two-part information carriers, a portion of which, when an object is delivered, can be removed and can be supplied to a storage unit from which this portion, after processing of the object in the order in which they were delivered, can be picked up and supplied to the placement surface again, **characterized in that** a plurality of identifiers which are composed of a plug-on element (10) and an object element (20) with the same symbols are present and are identical in pairs but have symbols which are different from identifier to identifier, **in that** an identifier can be separated into a plug-on element (10) and an object element (20), **in that**, when an object is delivered, any desired placement surface can be occupied and the separate object element (20) can be fitted in a manner associated with the object on the occupied placement surface, **in that** the separate plug-on element (10) can be inserted into the storage unit which is in the form of a slide (30), **in that**, after processing of the object delivered first which is identified by the lowermost plug-on element (10) in the stack of plug-on elements (10) stacked in the slide (30), discharge of the object onto the associated placement surface can be enabled, and **in that**, thereafter, the plug-on element (10) which is taken from the slide (30) and the object element (20) which is taken from the associated object can be reassembled and are available for use for a new identification process.

2. Apparatus according to Claim 1, **characterized in that** the object is in the form of a pallet with an individually fitted article or a plurality of fitted articles.

3. Apparatus according to Claims 1 and 2, **characterized in that** the symbols used are digits, numerals, words, images, colours and similar representations.

4. Apparatus according to Claims 1 to 3, **characterized in that** the object element (20) is in the form of an angled element with a horizontal placement plate (22) and a connecting plate (21) for a plug-on element (10), which connecting plate is inclined in relation to the placement plate (22) at an angle of β < 90°, **in that** the plug-on element (10) is designed in a plate-like manner with transition flanges (13, 14) and end flanges (11, 12) as a clip which can be plugged onto the connecting plate (21) of the object element (20) with play and can be removed again, and **in that** the plug-on element (10) and the plug-on plate (22) and/or the connecting plate (21) of the object element (20) are provided on one and/or both sides with identical symbols.

5. Apparatus according to Claims 1 to 4, **characterized in that** the object element (20) can be secured to a metallic, magnetically permeable substrate by means of a permanent magnet.

6. Apparatus according to Claims 1 to 5, **characterized in that** the plug-on element (10) and the object element (20) are stabilized from metal, wherein the metal is magnetically permeable, and **in that** the plug-on element (10) can be connected to the object element (20) by means of a permanent magnet.

7. Apparatus according to Claims 1 to 6, **characterized in that** the storage unit is in the form of a slide (30) in which the inserted plug-on elements (10) execute a sliding movement from top to bottom on account of their inherent weight, **in that** the slide (30) is connected to a placement plate (42) on a base plate (40), wherein the base plate (40) with the slide (30) can stand at an angle of β < 90° in relation to the placement plate (42), **in that** the horizontal cross section of the slide (30) is of T-shaped design and accommodates plug-on elements (10), which are in the form of clips, with play, **in that** the lower opening of the slide (30) has a cam (31) which firmly holds the stack of plug-on elements (10), which are inserted into the slide (30), in the slide (30), and **in that**, during removal of the lowermost plug-on element (10) from the slide (30), the cam (31) can be deflected and releases the lowermost plug-on element (10) for removal from the slide (30).

8. Apparatus according to Claim 7, **characterized in that** the base plate (40) has, beneath the slide (30) at a distance of at least the height of the lowermost plug-on element (10) in the slide (30), a horizontal clip (41) for suspending the identifiers which are composed of plug-on element (10) and object element (20).

9. Apparatus according to Claims 1 to 8, **characterized in that** the plug-on element (10) and the object element (20) can be connected to one another and released again by means of a plug-in connection or a connection of another type.

10. Apparatus according to Claim 7, **characterized in that** the base plate (40) with the slide (30) can be connected to any desired vertical wall without placement plate (42) and clip (41), and **in that** the base plate (40) has a container or a container is associated with the base plate (40), wherein the container accommodates identifiers which are composed of plug-on element (10) and object element (20).

## Revendications

1. Dispositif de stockage, d'organisation et de traitement d'objets qui peuvent être fournis les uns après les autres, déposés sur des surfaces au sol et traités dans l'ordre de leur fourniture puis à nouveau évacués, des supports d'information en deux parties étant associés aux surfaces au sol, dont une partie peut être enlevée lors de la fourniture d'un objet et acheminée à une unité de stockage, à partir de laquelle cette partie peut être reprise après le traitement de l'objet dans la séquence de leur fourniture et peut être à nouveau acheminée jusqu'à la surface au sol, **caractérisé en ce que** plusieurs identificateurs constitués d'un élément d'enclipsage (10) et d'un élément d'objet (20) avec les mêmes symboles sont prévus, lesquels sont identiques par paires mais portent des symboles différents d'un identificateur à l'autre, **en ce qu'**un identificateur peut être séparé en un élément d'enclipsage (10) et un élément d'objet (20), **en ce que** lors de la fourniture d'un objet, une surface au sol quelconque peut être occupée et l'élément d'objet séparé (20) peut être posé de manière associée à l'objet sur la surface au sol occupée, **en ce que** l'élément d'enclipsage séparé (10) peut être introduit dans l'unité de stockage réalisée sous forme de glissière (30), **en ce qu'**après le traitement de l'objet fourni en premier qui est **caractérisé par** l'élément d'enclipsage le plus bas (10) dans la pile des éléments d'enclipsage (10) empilés dans la glissière (30), l'évacuation de l'objet sur la surface au sol associée peut être déclenchée et en ce qu'ensuite l'élément d'enclipsage (10) enlevé de la glissière (30) et l'élément d'objet (20) enlevé de l'objet associé peuvent être à nouveau assemblés et sont disponibles pour l'utilisation pour une nouvelle opération d'identification.

2. Dispositif selon la revendication 1, **caractérisé en ce que** l'objet est réalisé sous forme de palette avec un seul article posé ou plusieurs articles posés.

3. Dispositif selon les revendications 1 et 2, **caractérisé en ce que** l'on utilise en tant que symboles des chiffres, des numéros, des mots, des images, des couleurs et représentations similaires.

4. Dispositif selon les revendications 1 à 3, **caractérisé en ce que** l'élément d'objet (20) est réalisé sous forme d'élément coudé avec une plaque d'application horizontale (22) et une plaque de connexion (21) inclinée suivant un angle β < 90° par rapport à la plaque d'application (22) pour un élément d'enclipsage (10), **en ce que** l'élément d'enclipsage (10) est réalisé en forme de plaque avec des brides de transition (13, 14) et des brides d'extrémité (11, 12) sous forme d'étrier qui peut être encliqueté avec jeu sur la plaque de connexion (21) de l'élément d'objet (20) et qui peut à nouveau être retiré et **en ce que** l'élément d'enclipsage (10) et la plaque d'enclipsage (22) et/ou la plaque de connexion (21) de l'élément d'objet (20) sont pourvus sur un côté et/ou sur les deux côtés des mêmes symboles.

5. Dispositif selon les revendications 1 à 4, **caractérisé en ce que** l'élément d'objet (20) peut être fixé au moyen d'un aimant permanent sur un subjectile métallique, conducteur magnétique.

6. Dispositif selon les revendications 1 à 5, **caractérisé en ce que** l'élément d'enclipsage (10) et l'élément d'objet (20) sont stabilisés en métal, le métal étant conducteur magnétique et **en ce que** l'élément d'enclipsage (10) peut être connecté au moyen d'un aimant permanent à l'élément d'objet (20).

7. Dispositif selon les revendications 1 à 6, **caractérisé en ce que** l'unité de stockage est réalisée sous forme de glissière (30) dans laquelle les éléments d'enclipsage introduits (10), du fait de leur propre poids, effectuent un mouvement de glissement de haut en bas, **en ce que** la glissière (30) est connectée sur une plaque de base (40) à une plaque au sol (42), la plaque de base (40) pouvant former avec la glissière (30) un angle β < 90° par rapport à la plaque au sol (42), **en ce que** la section transversale horizontale de la glissière (30) est réalisée en forme de T et reçoit avec jeu des éléments d'enclipsage (10) réalisés sous forme d'étrier, **en ce que** l'ouverture inférieure de la glissière (30) présente une came (31) qui retient dans la glissière (30) la pile d'éléments d'enclipsage (10) introduits dans la glissière (30) et **en ce que** lors de l'enlèvement de l'élément d'enclipsage inférieur (10) hors de la glissière (30), la came (31) peut être déviée et libère l'élément d'enclipsage inférieur (10) pour l'enlever de la glissière (30).

8. Dispositif selon la revendication 7, **caractérisé en ce que** la plaque de base (40), en dessous de la glissière (30) à une distance d'au moins la hauteur de l'élément d'enclipsage le plus bas (10) dans la glissière (30), porte un étrier horizontal (41) pour accrocher l'identificateur constitué de l'élément d'enclipsage (10) et de l'élément d'objet (20).

9. Dispositif selon les revendications 1 à 8, **caractérisé en ce que** l'élément d'enclipsage (10) et l'élément d'objet (20) peuvent être connectés l'un à l'autre et à nouveau détachés l'un de l'autre au moyen d'une connexion par enfichage ou d'une connexion configurée différemment.

10. Dispositif selon la revendication 7, **caractérisé en ce que** la plaque de base (40), avec la glissière (30) sans la plaque au sol (42) et l'étrier (41), peut être connectée à une paroi verticale quelconque et **en ce que** la plaque de base (40) présente un récipient ou la plaque de base (40) est associée à un récipient, le récipient recevant des identificateurs constitués de l'élément d'enclipsage (10) et de l'élément d'objet (20).
